# EUROPÄISCHE PATENTANMELDUNG

(11) **EP 1 653 050 A1**
(43) Veröffentlichungstag der Anmeldung: **03.05.2006**
(21) Anmeldenummer: 04025821.2
(22) Anmeldetag: 29.10.2004
(51) Int. Cl.: F01D 21/00, F02C 9/00

(54) **Verfahren zur Ermittlung eines für den Ermüdungszustand eines Bauteils charakteristischen Kennwert**

(71) Anmelder: SIEMENS AKTIENGESELLSCHAFT, 80333 München (DE)
(72) Erfinder: Bode, Andreas, 91315 Höchstadt (DE); Gobrecht, Edwin, 40885 Ratingen (DE)

(57) **Zusammenfassung**

Ein Verfahren zur Ermittlung eines Näherungswertes für einen für den Ermüdungszustand eines Bauteils infolge einer zeitlich variierenden Belastung charakteristischen Kennwert anhand einer Anzahl von Lastspielzyklen soll selbst bei zeitlich vergleichsweise lang ausgedehnten Belastungszyklen eine besonders bedarfsgerechte und für die zeitnahe Festlegung von Wartungsintervallen geeignete prognose über den aktuellen Ermüdungszustand des Bauteils ermöglichen. Dazu wird zusätzlich zu gegebenenfalls bereits vollständig abgeschlossenen Lastspielzyklen auch ein erst teilweise abgeschlossener Lastspielzyklus bei der Ermittlung des Kennwerts berücksichtigt, wobei temporäre Belastungswerte für noch nicht durchlaufene Phasen des teilweise abgeschlossenen Lastspielzyklus mit einem vorgegebenen Festwert berücksichtigt werden.

## Beschreibung

Verfahren zur Ermittlung eines Näherungswerts für einen für den Ermüdungszustand eines Bauteils charakteristischen Kennwert

Die Erfindung bezieht sich auf ein Verfahren zur Ermittlung eines Näherungswerts für einen für den Ermüdungszustand eines Bauteils in Folge einer zeitlich variierenden Belastung charakteristischen Kennwert anhand einer Anzahl von Lastspielzyklen.

In einer Vielzahl von Anwendungen in technischen Anlagen können Bauteile oder Komponenten alternierenden oder zeitlich variierenden Belastungen, beispielsweise mechanischer oder thermischer Art, ausgesetzt sein. Dabei können einzelne Bauteile beispielsweise unmittelbaren mechanischen Belastungen durch auftretende Druck- oder Zugspannungen ausgesetzt sein. Eine derartige zeitlich variierende Belastung thermischer Art entsteht hingegen beispielsweise für die Bauteile oder Komponenten in einer Turbinenanlage, insbesondere in einer Dampfturbine, wenn die Dampfturbine angefahren und/oder abgefahren wird.

Beim Anfahren der Dampfturbine werden nämlich die Turbinenteile von einem kalten Anfangszustand ausgehend zunehmend beheizt, bis sich im auslegungsgemäßen Betriebszustand ein vergleichsweise hohes Temperaturniveau eingestellt hat. Beim Abfahren der Dampfturbine werden hingegen die Bauteile ausgehend von einem vergleichsweise heißen Ausgangszustand immer weiter abgekühlt, bis sämtliche Bauteile Umgebungstemperatur erreicht haben. Während dieser Anwärm- und Abkühlphase entsteht in einigen Bauteilen eine Temperaturdifferenz zwischen der dem beheizenden oder kühlenden Medium unmittelbar ausgesetzten Oberfläche und dem Inneren des jeweiligen Bauteils. Derartige Temperaturunterschiede können zu thermischen Spannungen im Bauteil und somit zu einer unmittelbaren Belastung des Bauteils führen.

Das Auftreten von mechanischen oder thermischen Belastungen der genannten Art in den Bauteilen kann auf mikroskopischer Basis zu Umordnungsprozessen im Kristallgefüge der Bauteile oder dergleichen führen. Daher resultieren derartige zeitlich variierende Belastungen üblicherweise in einer sogenannten Materialermüdung oder Erschöpfung des jeweiligen Bauteils, die mit einer sukzessiven Verschlechterung oder Beeinträchtigung der Materialeigenschaften wie beispielsweise Härte oder Belastbarkeit einhergeht. Mit zunehmendem Ermüdungszustand des Bauteils oder der damit einhergehenden Beeinträchtigung der Materialeigenschaften kann das jeweilige Bauteil möglicherweise die spezifisch vorgegebenen Auslegungskriterien wie beispielsweise Belastbarkeit und dergleichen nicht mehr erfüllen, so dass infolge der fortschreitenden Ermüdung bei zeitlich variierender Belastung des jeweiligen Bauteils dessen Lebensdauer oder zukünftige Einsetzbarkeit begrenzt wird. Für die einer alternierenden oder zeitlich variierenden Belastung ausgesetzten Bauteile ist daher üblicherweise unter Berücksichtigung der auftretenden Ermüdung oder Materialerschöpfung ein rechtzeitiger Austausch des jeweiligen Bauteils oder auch eine andere geeignete Wartung innerhalb eines vorgegebenen Wartungsintervalls vorgesehen.

Um unnötigen Stillstand der jeweiligen technischen Anlagen und damit einhergehende hohe Wartungskosten und dergleichen zu vermeiden oder besonders gering zu halten, ist üblicherweise eine an den Ermüdungs- oder Erschöpfungszustand der besonders belasteten Bauteile angepasste Planung von Wartungsintervallen und dergleichen vorgesehen. Um dies besonders zielgerichtet erreichen zu können, ist für vielerlei Anwendungen die näherungsweise Bestimmung eines für den Ermüdungszustand des jeweiligen Bauteils charakteristischen Kennwerts vorgesehen. Zur Bestimmung eines derartigen Kennwerts werden üblicherweise die auch als Lastspiel bezeichneten Belastungszyklen des Bauteils ausgewertet. Dazu wird der zeitliche Verlauf der Belastung des jeweiligen Bauteils anhand der kontinuierlichen Erfassung eines dafür charakteristischen Messwerts überwacht.

Beispielsweise kann dabei der zeitliche Verlauf einer am Bauteil anliegenden mechanischen Spannung oder, wie beispielsweise im Fall einer Dampfturbine, der zeitliche Verlauf einer im Bauteil auftretenden Temperaturdifferenz zwischen Bauteiloberfläche und Bauteilinnerem, aus der eine thermische Belastung resultiert, überwacht werden. Als Lastspiel wird dabei ein vollständiger Belastungszyklus des Bauteils bezeichnet, bei dem ausgehend von einem Anfangszustand zunächst ein Maximum in der Belastung, beispielsweise auftretend durch eine maximale mechanische Spannung, und anschließend nach einem Nulldurchgang ein Minimum, beispielsweise auftretend durch eine maximale mechanische Zugspannung, durchlaufen wird. Der Endpunkt dieses als Lastspiel bezeichneten Belastungszyklus wird erreicht, wenn das Bauteil nach alternierend durchlaufener Druck- und Zugspannung wieder seinen ursprünglichen Zustand erreicht hat.

Das in einem derartigen Belastungszyklus insgesamt aufgetretene Lastspiel ist dabei üblicherweise die gesamte durchlaufene Schwankungsbreite der Belastung, also die Differenz zwischen den Belastungswerten bei maximal anliegender Druckspannung und bei maximal anliegender Zugspannung. Aufgrund von Erfahrungswerten, die üblicherweise einerseits material- und andererseits bauteilspezifisch vorliegen und beispielsweise in geeigneten Materialtabellen oder dergleichen vorgehalten sein können, wird aus einem derartigen Lastspiel nach Vollendung des jeweiligen Belastungszyklus ein die damit einhergehende Materialermüdung spezifizierender Kennwert ermittelt. Die insgesamt beim Einsatz des Bauteils aufgetretene Ermüdung oder Erschöpfung wird durch die Kumulation der einzelnen Ermüdungs-Kennwerte errechnet, wobei im Ergebnis ein für das Bauteil bisher insgesamt aufgetretener Erschöpfungswert ermittelt werden kann. Anhand dieses kumulierten Erschöpfungswerts kann sodann die erwartete Restlebensdauer des Bauteils prognostiziert werden, wobei ein Wartungs- oder Austauschintervall für das Bauteil anhand der jeweils ermittelten Erschöpfungs-Kennwerte besonders bedarfsgerecht festgelegt werden kann.

Nachteilig bei den genannten Konzepten ist jedoch, dass die in die Ermittlung des Kennwertes für den Erschöpfungszustand einfließenden Messwerte gerade bei Belastungszyklen, die sich je nach Anwendung der jeweiligen Komponente über einen bedeutenden Zeitraum von beispielsweise Monaten oder sogar Jahren erstrecken können, nur bedingt zeitnah zur Verfügung gestellt werden können.

Der Erfindung liegt daher die Aufgabe zugrunde, ein Verfahren zur Ermittlung eines Näherungswertes für einen für den Ermüdungszustand eines Bauteils infolge einer zeitlich variierenden Belastung charakteristischen Kennwert anhand einer Anzahl von Lastspielzyklen anzugeben, mit dem selbst bei zeitlich vergleichsweise lang ausgedehnten Belastungszyklen eine besonders bedarfsgerechte und für die zeitnahe Festlegung von Wartungsintervallen geeignete Prognose über den aktuellen Ermüdungszustand des Bauteils ermöglicht wird.

Diese Aufgabe wird erfindungsgemäß gelöst, indem zusätzlich zu gegebenenfalls bereits vollständig abgeschlossenen Lastspielzyklen auch ein erst teilweise abgeschlossener Lastspielzyklus bei der Ermittlung des Kennwerts berücksichtigt wird, wobei temporäre Belastungswerte für noch nicht durchlaufene Phasen des teilweise abgeschlossenen Lastspielzyklus mit einem vorgegebenen Festwert berücksichtigt werden.

Die Erfindung geht dabei von der Überlegung aus, dass ein auch für eine vergleichsweise zeitnahe Prognose des aktuellen Ermüdungszustands eines Bauteils geeignetes Verfahren unabhängig von möglicherweise vergleichsweise langen Zeitspannen bei der Beendigung eines Belastungszyklus ausgelegt sein sollte. Um dennoch eine vergleichsweise zuverlässige Prognose über den aktuellen Ermüdungszustand abgeben zu können, sollte das Verfahren jedoch nicht auf die Auswertung der in der Vergangenheit bereits abgeschlossenen Lastspielzyklen beschränkt sein. Dies ist erreichbar, indem auch für einen aktuell bereits bestehenden, aber noch nicht abgeschlossenen Lastspielzyklus bereits Erkenntnisse bei der Ermittlung des Näherungswerts für den Ermüdungszustand mitberücksichtigt werden, selbst wenn für diese aufgrund der nur unvollständig vorliegenden Daten des aktuellen Belastungszyklus möglicherweise eine vergleichsweise hohe Ungenauigkeit in Kauf genommen werden muss. Um dies zu erreichen, sollten beim aktuell durchlaufenen, noch nicht abgeschlossenen Belastungszyklus in größtmöglichem Umfang bereits tatsächlich vorliegende Messwerte mitberücksichtigt werden, wobei zur weiteren Verarbeitbarkeit für die noch nicht vorhandenen, für die noch nicht durchlaufenen Phasen des teilweise abgeschlossenen Lastspielzyklus charakteristischen Belastungswerte in der Art eines Platzhalters ein geeigneter Festwert als Ersatzwert vorgegeben wird.

Der für die noch nicht durchlaufenen Phasen des teilweise abgeschlossenen Lastspielzyklus als temporärer Belastungswert vorgegebene Festwert kann dabei insbesondere im Hinblick auf vorhandene, möglicherweise material- oder bauteilspezifische Erkenntnisse geeignet gewählt werden. Zur besonderen Vereinfachung der weiteren Auswertung wird jedoch vorteilhafterweise als Festwert ein Nullwert vorgegeben.

Die näherungsweise Ermittlung des für den aktuellen Ermüdungszustand des Bauteils charakteristischen Kennwerts erfolgt vorzugsweise anhand der Ermittlung eines Zwischenwerts aufgrund von ermittelten Belastungswerten des aktuell durchlaufenen Belastungszyklus, wobei der Zwischenwert anhand vorgehaltener Datenbasen geeignet in den eigentlichen für den Ermüdungszustand charakteristischen Kennwert umgeformt werden kann. Als Zwischenwert für die Ermittlung des Näherungswerts wird dabei vorteilhafterweise die Differenz aus dem globalen Maximum und dem globalen Minimum eines Lastspielzyklus gebildet.

Je nach zeitlicher Entwicklung der äußeren Umstände und möglicherweise variierenden betrieblichen Anforderungen kann ein Lastspielzyklus zusätzlich zu den in der Regel auftretenden globalen Maxima und Minima noch lokale Maxima oder Minima aufweisen. Um eine besonders zeitnahe und vergleichsweise genaue Ermittlung des für den Ermüdungszustand charakteristischen Kennwerts auch für den Fall zu ermöglichen, dass das globale Minimum des noch nicht abgeschlossenen Lastspielzyklus noch nicht erreicht ist und somit entsprechende Erkenntnisse noch nicht vorliegen, wird vorteilhafterweise als Zwischenwert für die Ermittlung des Näherungswerts die Differenz aus dem globalen Maximum und einem lokalen Minimum eines Lastspielzyklus gebildet.

Das Verfahren ist besonders vorteilhaft für Komponenten oder Bauteile einsetzbar, die betriebsbedingt einem zeitlich vergleichsweise lang ausgedehnten Belastungszyklus unterworfen sind, da gerade bei derartigen Bauteilen oder Komponenten die für die Auswertung ansonsten erforderliche vollständige Beendigung des aktuellen Lastspielzyklus oder Belastungszyklus zu einer vergleichsweise großen zeitlichen Abweichung bei der Ermittlung des Ermüdungszustands vom aktuellen Ist-Zustand führen kann. Vorteilhafterweise wird das Verfahren daher im Schwermaschinenbau, insbesondere in einer Kraftwerksanlage, vorzugsweise beim Betrieb einer Dampfturbinenanlage, eingesetzt.

Die mit der Erfindung erzielten Vorteile bestehen insbesondere darin, dass durch die Berücksichtigung noch nicht durchlaufener Phasen des teilweise abgeschlossenen Lastspielzyklus mit einem vorgegebenen Festwert für den jeweiligen Belastungswert eine besonders zeitnahe Ermittlung des Erschöpfungszustands des jeweiligen Bauteils ermöglicht ist, ohne dass zunächst der vollständige Abschluss des aktuellen Belastungszyklus abgewartet werden müsste. Dabei können zumindest die bereits vorliegenden Erkenntnisse des aktuellen Lastspielzyklus mitberücksichtigt werden, so dass für das jeweilige Bauteil auch innerhalb eines unvollständigen Lastspielzyklus zumindest ein Näherungswert für die mindestens bereits erreichte Erschöpfung oder Materialermüdung ermittelt werden kann. Damit sind gerade auch bei zeitlich vergleichsweise lang ausgedehnten Belastungszyklen qualitativ vergleichsweise hochwertige Prognosen zum aktuellen Materialzustand und über mögliche Restlebensdauern, erforderliche Wartungsarbeiten und dergleichen ermöglicht. Darüber hinaus ist, beispielsweise im Falle des Ausfalls eines Bauteils, eine verbesserte Diagnose ermöglicht, da eine auftretende Erschöpfung zeitnah zur zugrunde liegenden Ursache ermittelt wird, so dass eine Zuordnung der aufgetretenen Erschöpfung zur möglichen Ursache vergleichsweise präzise möglich ist.

Ein Ausführungsbeispiel der Erfindung wird anhand einer Zeichnung näher erläutert. Darin zeigt die Figur in Form eines Diagramms den möglichen zeitlichen Verlauf eines Belastungszyklus einer Komponente beim Betrieb einer Dampfturbine.

Bei der üblichen Betriebsweise einer Dampfturbine erfolgt in einer Start- oder Anlaufphase, ausgehend von der stillstehenden Turbine, eine sukzessiv ansteigende Beaufschlagung mit einem Arbeitsmedium hoher Temperatur, die zur Aufheizung von insbesondere den mit dem Medium in Kontakt stehenden Komponenten führt. Die Aufheizung der dem Medium unmittelbar ausgesetzten Komponenten wie beispielsweise der Turbinenschaufeln oder anderer dem Strömungsmedium unmittelbar ausgesetzten Bauteilen erfolgt dabei zunächst über eine vergleichsweise schnelle Erwärmung der dem Medium unmittelbar ausgesetzten Oberflächen, die sich in Folge der thermischen Trägheit je nach Material und Bauweise der jeweiligen Komponente, insbesondere der jeweiligen Wandstärke, mehr oder weniger schnell in den Innenbereich der jeweiligen Komponente fortsetzt. In einer Übergangsphase während des Anlaufens der Dampfturbine besteht somit in einigen Komponenten eine Temperaturdifferenz zwischen Außenseite oder Oberfläche einerseits und Innenbereich andererseits der jeweiligen Komponente. Diese Temperaturdifferenz resultiert in einer thermischen Spannung in der jeweiligen Komponente, die grundsätzlich einer mechanischen Spannung, beispielsweise einer Druckspannung, vergleichbar ist.

Beim Abkühlen der Dampfturbine erfolgt hingegen die Abkühlung der jeweiligen Komponenten, indem zunächst die Oberfläche auskühlt und sich diese zunehmende Auskühlung in den Innenraum der jeweiligen Komponente fortsetzt. Während dieser Betriebsphase der Dampfturbine besteht somit ebenfalls eine Temperaturdifferenz zwischen Bauteiloberfläche und Bauteilinnenraum an einzelnen Komponenten der Dampfturbine, wobei in dieser Phase jedoch die Oberfläche kälter ist als der Innenraum der jeweiligen Komponente. Die hieraus resultierenden thermischen Spannungen entsprechen beispielsweise einer mechanischen Zugspannung der Komponente.

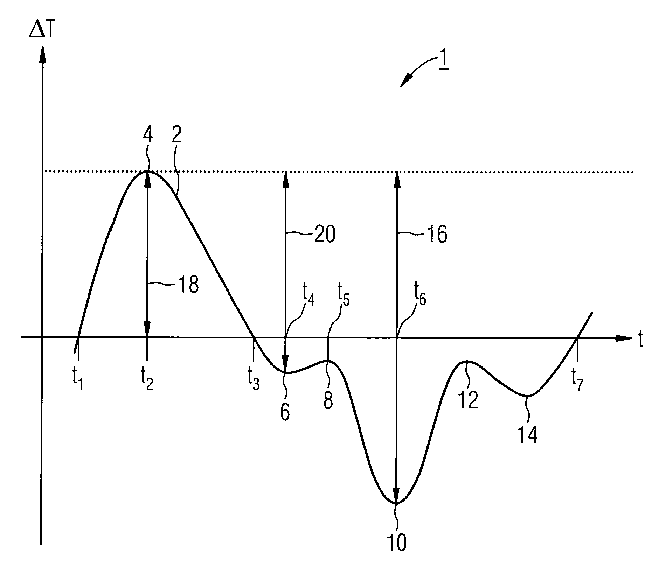

Die bei einer derartigen Betriebsweise auftretenden spannungsinduzierten Belastungen des jeweiligen Bauteils der Dampfturbine können beispielsweise dargestellt werden als sogenanntes Belastungs-Zeit-Diagramm, wie es im Fall einer Dampfturbine beispielhaft als Diagramm 1 in der Figur gezeigt ist. Auf der x-Achse des Diagramms 1 ist dabei die Zeit t aufgetragen, wobei im Ausführungsbeispiel auf der y-Achse ein ermittelter Kennwert für die Temperaturdifferenz ΔT zwischen der Oberfläche eines ausgewählten Bauteils der Dampfturbine, beispielsweise dem Turbinengehäuse, und der Temperatur in dessen Inneren aufgetragen ist. Diese Temperaturdifferenz ist charakteristisch für die im Bauteil auftretenden thermischen Spannungen und somit auch für die dadurch induzierten mechanischen Spannungen. Alternativ könnte, beispielsweise bei anderen Bauteilen der Dampfturbine oder auch bei Bauteilen einer anderen technischen Anlage, auf der y-Achse des Diagramms 1 ein anderer, für die Belastung des Bauteils charakteristischer Wert wie beispielsweise eine mechanische Spannung oder dergleichen, aufgetragen sein.

Der in Diagramm 1 in seiner Gesamtheit dargestellte Belastungszyklus des Bauteils der Dampfturbine beginnt zum Zeitpunkt t₁ mit der Startphase der Dampfturbine. Vom Zeitpunkt t₁ an wird die Dampfturbine zunehmend aufgewärmt, so dass sich eine positive Temperaturdifferenz zwischen der Oberfläche und dem-Inneren des Jeweiligen Bauteils- einstellt. In dieser Phase steigt die für den Belastungszyklus charakteristische Belastungskurve 2 im Diagramm 1 zunächst an. Beim weiteren Aufheizen der Dampfturbine vergrößert sich diese Temperaturdifferenz zunächst weiter, bis sie zum Zeitpunkt t₂ ein Maximum 4 erreicht.

Bei zunehmender Annäherung an den Gleichgewichtszustand nimmt die Temperaturdifferenz anschließend wieder ab, bis zum Zeitpunkt t₃ ein Gleichgewichtszustand erreicht ist, in dem innerhalb des jeweiligen Bauteils eine gleichförmige Temperaturverteilung vorliegt. Im in Diagramm 1 dargestellten Ausführungsbeispiel erfolgt anschließend betriebsartabhängig eine geringfügige Abkühlung der Komponenten, wobei diese sich ebenfalls ausgehend von der Oberfläche des Bauteils in dessen Innenraum hinein ausbreitet. Zwischen der Oberfläche und dem Innenraum des Bauteils entsteht somit eine negative Temperaturdifferenz. Zum Zeitpunkt t₄ ist der Betrag dieser Temperaturdifferenz maximal, so dass sich in der Belastungskurve 2 ein Minimum 6 bildet. Anschließend gleichen sich die Temperaturen zwischen Oberfläche und Innenraum des Bauteils einander wieder mehr an, so dass die Belastungskurve 2 wieder einem Nullwert zustrebt.

Im Ausführungsbeispiel erfolgt jedoch, bevor dieser erreicht ist, eine erneute Abkühlung der Dampfturbine, so dass der Betrag der Temperaturdifferenz zwischen Oberfläche und Innenraum des Bauteils wieder anwächst. Dies resultiert zum Zeitpunkt t₅ in einem lokalen Maximum 8 der Belastungskurve 2. Von diesem ausgehend vergrößert sich der Betrag der Temperaturdifferenz weiter und bildet zum Zeitpunkt t₆ ein weiteres Minimum 10 in der Belastungskurve 2. Von diesem ausgehend nähern sich die Temperaturen einander wieder an, wobei betriebsabhängig nach Durchlaufen eines weiteren Maximums 12 und eines weiteren Minimums 14 zum Zeitpunkt t₇ die Dampfturbine vollständig abgekühlt ist und die Temperaturdifferenz zwischen Oberfläche und Innenraum des ausgewählten Bauteils wieder den Wert Null annimmt.

Im Zeitraum zwischen den Zeitpunkten t₁ und t₇ durchläuft die Dampfturbine somit einen vollständigen Belastungszyklus mit Aufwärmung und Abkühlung des ausgewählten Bauteils. Infolge der durch die dargestellten Spannungen einsetzenden mikroskopischen Umordnungsvorgänge erfolgt beim Durchlaufen eines derartigen Belastungszyklus - "auch Lastspiel" genannt - auch eine als Ermüdung oder Erschöpfung des Materials bezeichnete Schwächung des Bauteils, die in reduzierter mechanischer Belastbarkeit und dergleichen resultiert. Die Lebensdauer des jeweiligen Bauteils ist dabei insbesondere durch die mit der genannten Belastung einhergehende Schwächung oder Ermüdung begrenzt, so dass bei Überschreiten einer insgesamt für das Bauteil als zulässig angesehenen Materialerschöpfung oder Ermüdung ein Austausch oder eine Reparatur des jeweiligen Bauteils als erforderlich angesehen wird.

Die Zuordnung eines für den Erschöpfungszustand des Bauteils charakteristischen Kennwerts kann dabei anhand von bauteil-und materialspezifischen Erfahrungswerten erfolgen, die beispielsweise in einer Datenbank hinterlegt sein können. Zur Zuordnung eines näherungsweisen Schätzwerts für diese Erschöpfung wird der im Diagramm 1 dargestellte Belastungszyklus ausgewertet, indem das durch die Differenz zwischen dem globalen Maximum 4 und dem globalen Minimum 10 gegebene, durch den Pfeil 16 symbolisierte sogenannte Lastspiel errechnet wird. Diesem kann aufgrund vorangegangener Erfahrungen, gegebenenfalls unter Nutzung von in der Datenbank hinterlegten Daten, ein Schätzwert für die zusätzliche Ermüdung zugeordnet werden, die das Bauteil nach Durchlaufen des gesamten durch die Belastungskurve 2 repräsentierten Belastungszyklus erfahren hat. Diese zusätzliche Ermüdung kann in der Art einer kumulierten Auswertung zu vorherigen, auf der Grundlage vergangener Belastungszyklen für das Bauteil ermittelten Erschöpfungs-Kennwerten hinzuaddiert werden, so dass sich ein für die insgesamt für das jeweilige Bauteil vorliegende Erschöpfung charakteristischer Näherungswert ergibt. Aus diesem kann sodann beispielsweise eine Aussage über die Restlebensdauer des Bauteils, eine Prognose für zukünftige Wartungsintervalle oder auch eine Diagnoseaussage oder dergleichen gewonnen werden.

Gerade beim dargestellten Beispiel der Belastung einer Komponente einer Dampfturbine kann sich der insgesamt durchlaufene Belastungszyklus jedoch über einen beträchtlichen Zeitraum, beispielsweise über Monate oder Jahre hinweg, erstrecken. Um dabei für die Ermittlung des Schätzwerts für den aktuellen Ermüdungszustand des Bauteils nicht auf den vollständigen Ablauf des aktuellen Belastungszyklus angewiesen zu sein und eine qualitativ vergleichsweise hochwertige Prognoseaussage besonders zeitnah treffen zu können, ist bei der Ermittlung des Näherungswerts für den für den Ermüdungszustand des Bauteils infolge der zeitlich variierenden Belastung charakteristischen Kennwert zusätzlich zu den gegebenenfalls bereits abgeschlossenen Lastspielzyklen auch noch die Berücksichtigung eines teilweise abgeschlossenen Lastspielzyklus vorgesehen, wobei in der Berechnung temporäre Belastungswerte für noch nicht durchlaufene Phasen des teilweise abgeschlossenen Lastspielzyklus mit einem Nullwert als vorgegebenen Festwert berücksichtigt werden.

So erfolgt beispielsweise zu einem Zeitpunkt nach Durchlaufen des ersten Maximums 4, also zu einem Zeitpunkt nach dem Zeitpunkt t₂, eine Ermittlung des Näherungswerts für den Ermüdungszustand des Bauteils mit der Maßgabe, dass der noch nicht abgeschlossene Lastspielzyklus durch Berücksichtigung der durch den Doppelpfeil 18 angedeuteten, bislang maximalen Belastung einfließt. Zu diesem Zweck werden bei der zugrundeliegenden Berechnung die weiteren möglicherweise relevanten Kenngrößen, also beispielsweise die temporäre Belastung im globalen Minimum 10, die noch nicht durchlaufen wurden, als Nullwerte eingesetzt. Nach Durchlaufen des lokalen Minimums 6 wird hingegen der durch den Doppelpfeil 20 angedeutete bislang maximale Betrag der Belastung, gegeben durch Auswertung des globalen Maximums 4 und des lokalen Minimums 6, als Zwischenwert für die Ermittlung des Näherungswerts berücksichtigt.

## Patentansprüche

1. Verfahren zur Ermittlung eines Näherungswertes für einen für den Ermüdungszustand eines Bauteils infolge einer zeitlich variierenden Belastung charakteristischen Kennwert anhand einer Anzahl von Lastspielzyklen, bei dem ein erst teilweise abgeschlossener Lastspielzyklus mitberücksichtigt wird, wobei temporäre Belastungswerte für noch nicht durchlaufene Phasen des teilweise abgeschlossenen Lastspielzyklus mit einem vorgegebenen Festwert berücksichtigt werden.

2. Verfahren nach Anspruch 1, bei dem als Festwert ein Nullwert vorgegeben wird.

3. Verfahren nach Anspruch 1 oder 2, bei dem als Zwischenwert für die Ermittlung des Näherungswertes die Differenz aus dem globalen Maximum und dem globalen Minimum eines Lastspielzyklus gebildet wird.

4. Verfahren nach Anspruch 1 oder 2, bei dem als Zwischenwert für die Ermittlung des Näherungswertes die Differenz aus dem globalen oder einem lokalen Maximum und dem globalen oder einem lokalen Minimum eines Lastspielzyklus gebildet wird.

5. Verfahren nach einem der Ansprüche 1 bis 4, bei dem ein Näherungswert für einen für den Ermüdungszustand eines Bauteils einer Dampfturbine charakteristischer Kennwert ermittelt wird.
